# EUROPEAN PATENT APPLICATION

(11) **EP 4 803 924 A1**
(43) Date of publication of application: **09.09.2026**
(21) Application number: 24892740.2
(22) Date of filing: 05.06.2024
(51) Int. Cl.: G01S 7/481, G01S 17/931

(54) **LASER RADAR, ELECTRONIC DEVICE, AND VEHICLE**

(30) Priority: 22.11.2023 CN 202311579772
(71) Applicant: Huawei Technologies Co., Ltd., Shenzhen, Guangdong 518129 (CN)
(72) Inventor: DENG, Liping, Shenzhen, Guangdong 518129 (CN); YANG, Song, Shenzhen, Guangdong 518129 (CN); JIN, Song, Shenzhen, Guangdong 518129 (CN); XIAO, Liuchang, Shenzhen, Guangdong 518129 (CN); CAO, Guohe, Shenzhen, Guangdong 518129 (CN); XU, Liang, Shenzhen, Guangdong 518129 (CN)
(74) Representative: Körber, Martin Hans
(86) International application number: PCT/CN2024/097512
(87) International publication number: WO 2025/107575

(57) **Abstract**

Embodiments of this application disclose a lidar, an electronic device, and a vehicle, and relate to the field of sensor technologies, to resolve a problem of low ranging accuracy and resolution of an existing lidar. The lidar includes a housing, a protective cover, and a lens group. The housing is provided with an accommodating cavity, and a mounting opening is provided in the housing. The protective cover is connected to the mounting opening in a waterproof manner. The protective cover is provided with a lens accommodating hole, the lens accommodating hole is provided with a first opening and a second opening, the first opening faces the mounting opening and communicates with the accommodating cavity, and the second opening communicates with the outside. The lens group is connected in the lens accommodating hole in a waterproof manner.

## Description

This application claims priority to Chinese Patent Application No. 202311579772.0, filed with the China National Intellectual Property Administration on November 22, 2023 and entitled "LIDAR, ELECTRONIC DEVICE AND VEHICLE", which is incorporated herein by reference in its entirety.

### TECHNICAL FIELD

This application relates to the field of sensor technologies, and in particular, to a lidar, an electronic device, and a vehicle.

### BACKGROUND

A lidar is short for a light detection and ranging system, which is a radar system that emits laser beams to detect feature quantities of a target, such as position and velocity. A working principle of the lidar is to transmit a detection signal (laser beam) to the target, compare a received signal (target echo) reflected from the target with the transmitted signal, and then perform proper processing to obtain relevant information of the target, such as parameters of the target like distance, azimuth, altitude, velocity, posture, and even shape. In this way, targets such as aircraft and missiles are detected, tracked, and identified.

A waterproof structure of an existing lidar may affect laser transmission by a transmitter or reception of a returned laser by a receiver, resulting in low ranging accuracy and resolution of the lidar.

### SUMMARY

Embodiments of this application provide a lidar, an electronic device, and a vehicle, to resolve a problem of low ranging accuracy and resolution of an existing lidar.

To achieve the foregoing objective, this application uses the following technical solutions.

According to a first aspect, an embodiment of this application provides a lidar, including a housing and a protective cover. The housing is provided with an accommodating cavity, and a mounting opening is provided in the housing. The protective cover may be mounted at the mounting opening and is connected to the housing in a waterproof manner. The lidar may further include a transmitter, a receiver, and a circuit board. Both the transmitter and the receiver are disposed on the circuit board. The transmitter and the receiver each include a lens group. The lens group of the transmitter is a transmitter lens group, and the lens group of the receiver is a receiver lens group. A signal processing circuit is disposed on the circuit board, and the transmitter and the receiver are disposed on the circuit board and are electrically connected to the signal processing circuit. A circuit board assembly including the circuit board, the transmitter, and the receiver may be disposed in the accommodating cavity of the housing.

The protective cover is provided with a lens accommodating hole, and the lens accommodating hole is provided with a first opening and a second opening. The first opening of the lens accommodating hole may face the mounting opening of the housing, and communicates with the accommodating cavity of the housing, and the second opening of the lens accommodating hole communicates with the outside. There may be two lens accommodating holes, and the two lens accommodating holes may be a first lens accommodating hole and a second lens accommodating hole. The transmitter lens group of the transmitter may be mounted in the first lens accommodating hole of the protective cover, and is connected to the waterproof cover in a waterproof manner. The receiver lens group of the receiver may also be mounted in the second lens accommodating hole of the protective cover, and is connected to the waterproof cover in a waterproof manner.

Therefore, the protective cover may perform waterproofing on the transmitter lens group and the receiver lens group, and is connected to the housing in a waterproof manner, thereby ensuring waterproof performance of the transmitter lens group, the receiver lens group, and the circuit board assembly in the accommodating cavity. A laser beam emitted by the transmitter may be emitted through the second opening of the first lens accommodating hole, and the receiver may receive a returned laser beam through the second opening of the second lens accommodating hole. The laser beam emitted by the transmitter and the laser beam received by the receiver are not affected by the protective cover, so that ranging accuracy and resolution of the lidar are high.

In addition, in some embodiments of this application, the protective cover is made of plastic. In some other embodiments of this application, the protective cover is made of metal with a low cost. Both the plastic and the metal are inexpensive, which reduces a cost of the lidar.

Further, in view of a requirement on a field-of-view of the lidar, in some embodiments of this application, a wall surface on which the lens accommodating hole in the protective cover is located protrudes from the housing. When the lidar in this embodiment of this application is mounted on a vehicle, the housing of the lidar may be accommodated in a vehicle body of the vehicle, and the wall surface on which the lens accommodating hole in the protective cover is located may protrude from the vehicle body of the vehicle. Compared with a lidar whose entire protective cover protrudes from a housing, in the lidar in this embodiment of this application, a portion of an area of the protective cover protrudes from the vehicle body, and the area of the lidar protruding from the vehicle body is reduced, thereby improving integration of the lidar and the vehicle body.

For the lidar, waterproof performance is one of key factors that affect performance stability and a service life of the lidar. There may be a plurality of waterproof connection manners between the lens group and the protective cover. For example, in some embodiments of this application, the lens group includes a plurality of lenses and a housing body, and the plurality of lenses are mounted in the housing body. A first flange is disposed on an outer wall of the housing body in a circumferential direction, and a first mounting groove is formed in the first flange. The first mounting groove is located on a surface that is of the first flange and that faces the protective cover. The protective cover is provided with a first connection protrusion that cooperates with the first mounting groove, and the first connection protrusion is connected to the first mounting groove in a waterproof manner. For example, the first connection protrusion is bonded to the first mounting groove by using a waterproof adhesive, and waterproof effect is good.

Further, there may also be a plurality of waterproof connection manners between the protective cover and the housing. For example, in some embodiments of this application, a second mounting groove is provided in the housing. A second connection protrusion is disposed at a position that is on the protective cover and that corresponds to the second mounting groove, and the second connection protrusion is connected to the second mounting groove in a waterproof manner. For example, the second connection protrusion is bonded to the second mounting groove by using a waterproof adhesive, and waterproof effect is good.

In addition, in some embodiments of this application, the lens group is partially disposed in the mounting opening. Moreover, the lens group is further connected to the housing in a waterproof manner, and a waterproof path is added to enhance waterproofing effect on the lens group and a component in the accommodating cavity of the housing.

There are also a plurality of waterproof connection manners between the lens group and the housing. In some embodiments of this application, a second flange is disposed on the outer wall of the housing body of the lens group, and the second flange extends along the circumferential direction of the housing body. A support boss is disposed at a position that is on the housing and that corresponds to the second flange, and the support boss is connected to the second flange in a waterproof manner. For example, the support boss is bonded to the second flange by using a waterproof adhesive, and waterproof effect is good.

It should be noted that, to facilitate assembly of the circuit board, in some embodiments of this application, the housing includes a first housing and a second housing, and the first housing is connected to the second housing in a waterproof manner. The mounting opening may be provided in the second housing body. When the circuit board is mounted in the first housing body, the transmitter lens group of the transmitter and the receiver lens group of the receiver are aligned with the mounting opening of the second housing body. Then, the first housing is connected to the second housing, and an assembly operation is convenient.

Based on this, there are a plurality of waterproof connection manners between the first housing and the second housing. For example, a third connection protrusion is disposed on the first housing, and a third mounting groove is provided at a position that is on the second housing and that corresponds to the third connection protrusion. The third mounting groove may be connected to the third connection protrusion in a waterproof manner. For example, the third mounting groove is bonded to the third connection protrusion by using a waterproof adhesive, and waterproof effect of the housing is good.

According to a second aspect, an embodiment of this application further provides an electronic device, including a controller and the lidar described in the foregoing embodiments. The controller is electrically connected to the lidar. The electronic device may be a robot, a monitoring device, a smart home device (such as an air conditioner or an air purifier), or the like. Because a structure of the lidar in the electronic device in this embodiment of this application is the same as that of the lidar in the foregoing embodiment, the two types of lidar can resolve same technical problems and obtain same technical effects. Details are not described herein again.

According to a third aspect, an embodiment of this application further provides a vehicle, including a vehicle body and the lidar described in the foregoing embodiments, where the lidar is mounted on the vehicle body. Because a structure of the lidar in the vehicle in this embodiment of this application is the same as that of the lidar in the foregoing embodiment, the two types of lidar can resolve same technical problems and obtain same technical effects. Details are not described herein again.

### BRIEF DESCRIPTION OF DRAWINGS

To describe the technical solutions in embodiments of this application, the following describes the accompanying drawings used in embodiments of this application.
FIG. 1 is a diagram of detection ranges of various sensors in an intelligent vehicle according to an embodiment of this application;
FIG. 2 is a three-dimensional diagram of a lidar according to an embodiment of this application;
FIG. 3 is a diagram of a structure of a circuit board assembly in a lidar according to an embodiment of this application;
FIG. 4 is an exploded view of a lidar according to an embodiment of this application;
FIG. 5 is a diagram of a structure of a protective cover in a lidar according to an embodiment of this application;
FIG. 6 is a diagram of a structure of a transmitter lens group in a lidar according to an embodiment of this application;
FIG. 7 is a cross-sectional diagram of a first lidar according to an embodiment of this application;
FIG. 8 is a cross-sectional diagram of a second lidar according to an embodiment of this application;
FIG. 9 is a cross-sectional diagram of a third lidar according to an embodiment of this application;
FIG. 10 is a cross-sectional diagram of a fourth lidar according to an embodiment of this application;
FIG. 11 is a diagram of a structure of a second housing body in a lidar according to an embodiment of this application; and
FIG. 12 is a diagram of a structure of a first housing body in a lidar according to an embodiment of this application.

### Reference numerals:

1000: intelligent vehicle; 100: camera apparatus; 200: lidar; 1: housing; 101: accommodating cavity; 102: mounting opening; 1021: first communication hole; 1022: second communication hole; 103: second mounting groove; 104: support boss; 1041: second groove; 11: first housing; 111: third mounting groove; 12: second housing; 121: third connection protrusion; 13: screw; 2: transmitter; 21: transmitter lens group; 211: lens; 212: housing body; 2121: first flange; 2121a: first mounting groove; 2121b: first groove; 2122: second flange; 2122a: protrusion; 3: receiver; 31: receiver lens group; 4: circuit board; 5: protective cover; 501: lens accommodating hole; 5011: first opening; 5012: second opening; 501a: first lens accommodating hole; 501b: second lens accommodating hole; 51: first connection protrusion; 52: second connection protrusion; 05: lens sleeve; 06: waterproof glass; 300: millimeter-wave radar; 400: ultrasonic sensor.

### DESCRIPTION OF EMBODIMENTS

To make the objectives, technical solutions, and advantages of this application clearer, the following further describes this application in detail with reference to the accompanying drawings.

The terms "first" and "second" mentioned below are merely intended for a purpose of description, and shall not be understood as an indication or implication of relative importance or implicit indication of a quantity of indicated technical features. Therefore, a feature limited by "first", "second", or the like may explicitly or implicitly include one or more features. In the descriptions of this application, unless otherwise stated, "a plurality of' means two or more.

In addition, in this application, orientation terms such as "up", "down", "left", "right", "horizontal", and "vertical" are defined relative to an orientation in which components are schematically placed in the accompanying drawings. It should be understood that, these directional terms are relative concepts that are used for relative description and clarification, and may vary accordingly based on changes of the orientation in which the components are placed in the accompanying drawings.

In this application, unless otherwise specified and limited, the term "connection" should be understood in a broad sense. For example, the "connection" may be a connection of a mechanical structure or a connection of a physical structure. For example, the connection may be a fixed connection, or may be a detachable connection, or may be an integral connection, or may be a direct connection, or may be an indirect connection through an intermediate medium. The connection may alternatively be understood as physical contact and electrical conduction of components, or may be understood as a form in which different components in a line structure are connected through physical lines that can transmit an electrical signal, such as a circuit board (process control block, PCB) copper foil or a conducting wire.

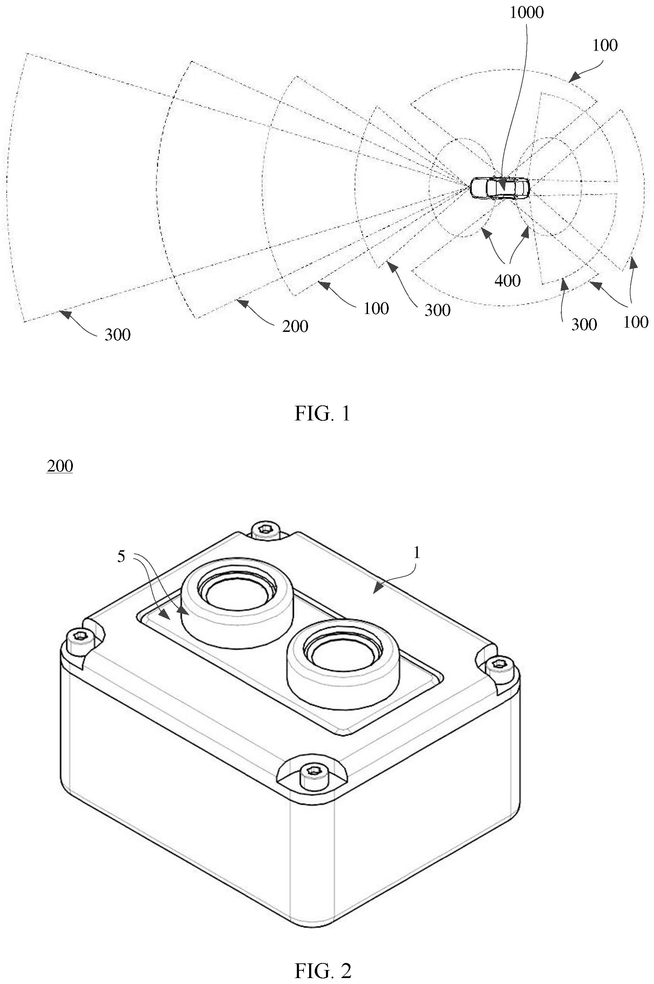

This application provides a vehicle. The vehicle may be a car, an electric vehicle, a hybrid vehicle, or the like, or may be an intelligent vehicle. A specific form of the foregoing vehicle is not specially limited in this embodiment of this application. For ease of description, the following uses an example in which the vehicle is an intelligent vehicle 1000 shown in FIG. 1 for description.

FIG. 1 is a three-dimensional diagram of an intelligent vehicle 1000 according to some embodiments of this application. It can be learned from the foregoing that, in this embodiment, the vehicle is the intelligent vehicle 1000, and a controller and a plurality of sensors may be mounted on the intelligent vehicle 1000. The controller may be connected to the plurality of sensors. The intelligent vehicle 1000 obtains environment information around the vehicle by using the plurality of sensors, and analyzes and processes the obtained information, to implement functions such as obstacle perceiving, target recognition, vehicle positioning, route planning, and driver monitoring and reminder. This improves driving safety, automation, and comfort of the vehicle. Therefore, the intelligent vehicle 1000 can bring safe and comfortable driving experience to people.

For example, the plurality of sensors mounted on the intelligent vehicle 1000 may include a camera apparatus 100, a lidar 200, a millimeter-wave radar 300, an ultrasonic sensor 400, and the like. FIG. 1 shows detection ranges of the various sensors. The millimeter-wave radar 300 may include a medium-distance millimeter-wave radar, a short-distance millimeter-wave radar, and a long-distance millimeter-wave radar.

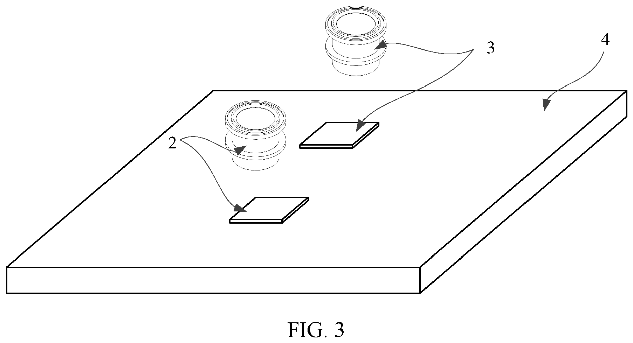

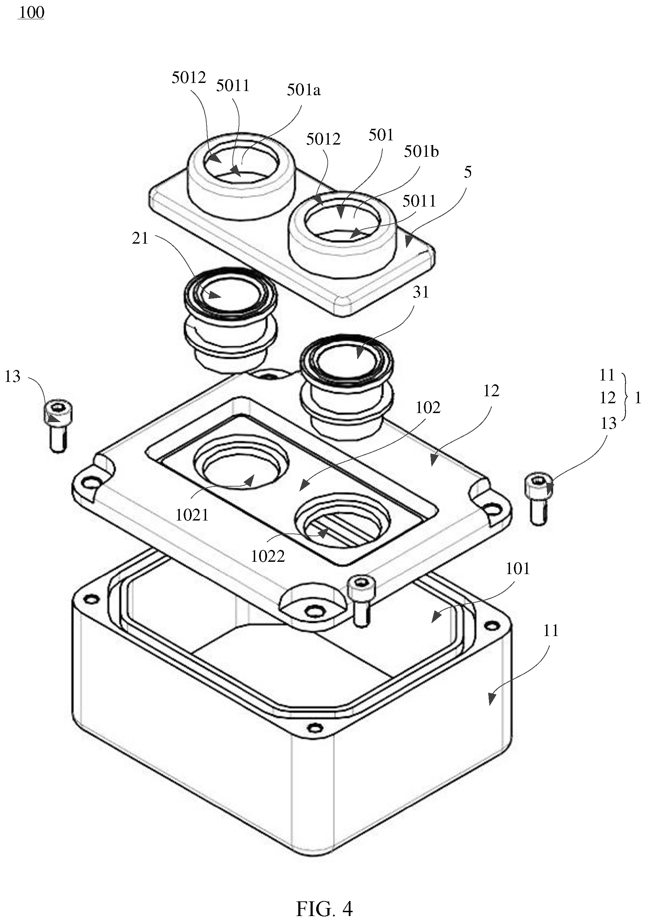

The lidar 200 (laser radar, LR) is short for a light detection and ranging system. The lidar 200 may be mounted outside a door of the intelligent vehicle 1000, a front portion of a vehicle roof, or the like. This is not limited in this application. Refer to FIG. 2 and FIG. 3. The lidar 200 includes a housing 1, a transmitter 2, a receiver 3, and a circuit board 4. An accommodating cavity 101 shown in FIG. 4 is provided in the housing 1. The transmitter 2 and the receiver 3 are both disposed (for example, soldered) on the circuit board 4 to obtain a circuit board assembly. The circuit board assembly is disposed in the accommodating cavity 101 of the housing 1. The transmitter 2 is a laser emitting apparatus in the lidar 200. The transmitter 2 is configured to emit a laser toward a target object. The receiver 3 is a laser receiving apparatus in the lidar 200, and is configured to receive a laser reflected by the target object. The transmitter 2 and the receiver 3 each include a lens group. The lens group of the transmitter 2 may be referred to as a transmitter lens (transmitter lens, TR) group, and the lens group of the receiver 3 may be referred to as a receiver lens (receiver lens, RL) group. The circuit board 4 has a signal processing circuit, and the signal processing circuit is electrically connected to both the transmitter 2 and the receiver 3. The signal processing circuit is configured to control emission of the transmitter 2, process a signal received by the receiver 3, and calculate information such as a position, a velocity, a distance, and a size of the target object. In addition, the circuit board 4 may be electrically connected to the foregoing controller. The controller may receive detection information of the lidar 200 from the circuit board 4.

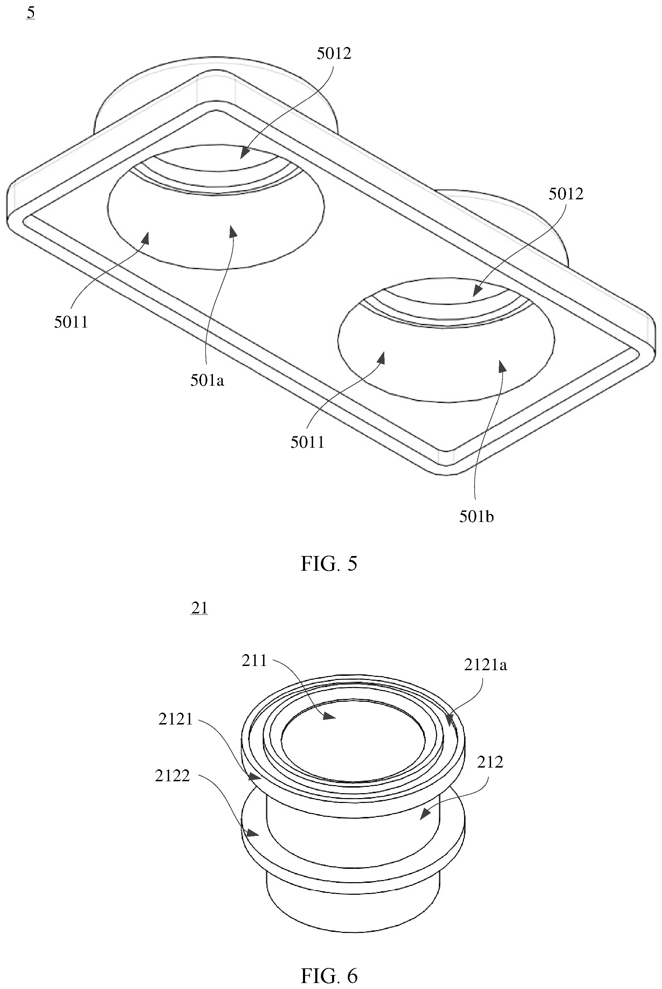

The lidar 200 needs to be provided with a waterproof structure, to ensure waterproof effect on the circuit board assembly including the transmitter 2, the receiver 3, and the circuit board 4 in the housing 1. Therefore, refer to FIG. 4. The lidar 200 in this embodiment of this application further includes a protective cover 5. The housing 1 is provided with a mounting opening 102, and the protective cover 5 may be mounted at the mounting opening 102 and is connected to the housing 1 in a waterproof manner. In addition, the protective cover 5 is provided with a lens accommodating hole 501, and the lens accommodating hole 501 is configured to accommodate the transmitter lens group 21 or the receiver lens group 31. The protective cover 5 shown in FIG. 4 and FIG. 5 includes two lens accommodating holes 501, and the two lens accommodating holes 501 are a first lens accommodating hole 501a and a second lens accommodating hole 501b. The first lens accommodating hole 501a may be configured to accommodate the transmitter lens group 21, and the second lens accommodating hole 501b is configured to accommodate the receiver lens group 31. In addition, there are two mounting openings, and each lens accommodating hole 501 is provided with a first opening 5011 and a second opening 5012. The first lens accommodating hole 501a is used as an example. The first opening 5011 of the first lens accommodating hole 501a faces the mounting opening 102, and communicates with the accommodating cavity 101 of the housing 1, and the second opening 5012 of the first lens accommodating hole 501a communicates with the outside. The outside herein refers to an external environment in which the lidar 200 is located. That is, the second opening 5012 of the first lens accommodating hole 501a is not blocked on the outside. The first opening 5011 of the second lens accommodating hole 501b also faces the mounting opening 102, and communicates with the accommodating cavity 101 of the housing 1, and the second opening 5012 of the second lens accommodating hole 501b communicates with the outside. The outside herein also refers to the external environment in which the lidar 200 is located. That is, the second opening 5012 of the second lens accommodating hole 501b faces outward without blocking.

In addition, the housing 1 shown in FIG. 4 is further provided with a first communication hole 1021 and a second communication hole 1022 that communicate with the accommodating cavity 101, and both the first communication hole 1021 and the second communication hole 1022 communicate with the mounting opening 102. Further, the first lens accommodating hole 501a of the protective cover 5 may be aligned with the first communication hole 1021, and communicates with the accommodating cavity 101 through the first communication hole 1021. The second lens hole 501b of the protective cover may be aligned with the second communication hole 1022, and communicates with the accommodating cavity 101 through the second communication hole 1022.

After the circuit board assembly is mounted in the accommodating cavity 101 of the housing 1, the protective cover 5 is mounted at the mounting opening 102 of the housing 1. The first communication hole 1021 and the first lens accommodating hole 501a of the protective cover 5 are aligned with the transmitter lens group 21, and the second communication hole 1022 and the second lens accommodating hole 501b of the protective cover 5 are aligned with the receiver lens group 31. In this way, the transmitter lens group 21 is connected to the first lens accommodating hole 501a in a waterproof manner, and the receiver lens group 31 is connected in the second lens accommodating hole 501b of the protective cover 5 in a waterproof manner. As a result, a laser generated by the transmitter 2 may be directly emitted to the external environment through the transmitter lens group 21 and the second opening 5012 of the transmitter lens group 21 for monitoring. A laser reflected from the external environment is directly incident to the receiver 3 through the second opening 5012 of the receiver lens group 31 and the receiver lens group 31.

In this embodiment of this application, the transmitter lens group 21 is accommodated in the first lens accommodating hole 501a, and the receiver lens group 31 is accommodated in the second lens accommodating hole 501b. That is, the protective cover 5 may be directly used as a waterproof structure to wrap the transmitter lens group 21 and the receiver lens group 31. The protective cover 5 may have good waterproof effect on the transmitter lens group 21 and the receiver lens group 31, and no additional waterproof glass needs to be disposed for waterproofing. The laser beam emitted by the transmitter 2 may be directly emitted to the outside, and the laser beam returned from the outside may be directly incident to the receiver 3. Neither of the laser beams is affected by the protective cover 5, and ranging accuracy and resolution of the lidar 200 are high.

It may be understood that, to ensure that both the transmitter 2 and the receiver 3 have a wider field of view, an outer end of the transmitter lens group 21 in the transmitter 2 may be flush with the second opening 5012 of the first lens accommodating hole 501a, and an outer end of the receiver lens group 31 may be flush with the second opening 5012 of the second lens accommodating hole 501b. This can ensure waterproof effect of the transmitter lens group 21 and the receiver lens group 31, as well as a wider field of view.

In addition, in some embodiments of this application, both wall surfaces on which the first lens accommodating hole 501a and the second lens accommodating hole 501b in the protective cover 5 are located may be located outside the housing 1. To be specific, the wall surfaces on which the first lens accommodating hole 501a and the second lens accommodating hole 501b in the protective cover 5 are located protrude from the housing 1, and a wall surface of another area on the protective cover 5 may be embedded in a wall surface of the housing 1. When the lidar 200 in this embodiment of this application is mounted on the intelligent vehicle 1000, the housing 1 of the lidar 200 may be accommodated in a vehicle body of the intelligent vehicle 1000. The wall surfaces on which the first lens accommodating hole 501a and the second lens accommodating hole 501b in the protective cover 5 are located may protrude from the vehicle body. Compared with a lidar 200 whose entire protective cover 5 protrudes from a housing 1, in the lidar 200 in this embodiment of this application, only a portion of an area of the protective cover 5 protrudes from the vehicle body, and the area of the lidar 200 protruding from the vehicle body is reduced, thereby improving integration of the lidar 200 and the vehicle body.

The above describes a mounting position of the protective cover 5. Moreover, a specific waterproof structure at a joint between the protective cover 5 and another component (for example, the transmitter lens group 21, the receiver lens group 31, or the housing 1) is also very important. Waterproof performance affects performance stability and a service life of the lidar 200.

There may be a plurality of waterproof connection manners between the transmitter lens group 21 and the receiver lens group 31, and the protective cover 5. The following uses the transmitter lens group 21 as an example. In some embodiments of this application, as shown in FIG. 6, the transmitter lens group 21 includes a plurality of lenses 211 and a housing body 212, and the plurality of lenses 211 are mounted in the housing body 212. A first flange 2121 is disposed on an outer wall of the housing body 212 in a circumferential direction, and a first mounting groove 2121a is formed in the first flange 2121. The first mounting groove 2121a is located on a surface that is of the first flange 2121 and that faces the protective cover 5. The protective cover 5 is provided with a first connection protrusion 51 that can cooperate with the first mounting groove 2121a. The first connection protrusion 51 may be mounted in the first mounting groove 2121a, and both of which are connected in a waterproof manner. For example, the first mounting groove 2121a is filled with waterproof adhesive, and then the first connection protrusion 51 is mounted in the first mounting groove 2121a, to implement the waterproof connection between the first mounting groove 2121a and the first connection protrusion 51. In this case, waterproof structure is simple, and waterproof effect is good. The circuit board assembly in the housing 1 may be isolated from external vapor, impurities, and the like, so that the performance stability of the lidar 200 is good, and the service life is long. It may be understood that positions of the first connection protrusion 51 and the first mounting groove 2121a may also be exchanged. This is not limited in this application.

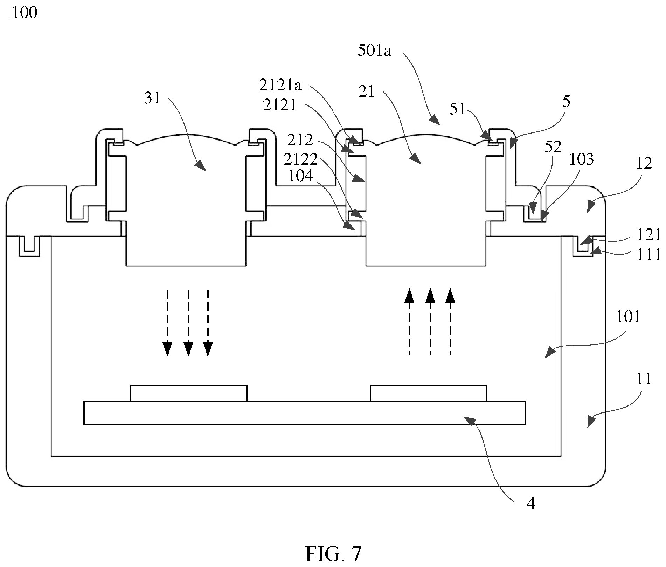

A cross section of the first mounting groove 2121a shown in FIG. 7 is U-shaped. In addition, the first mounting groove 2121a is an annular groove, and extends along the circumferential direction of the first flange 2121. A cross section of the first connection protrusion 51 is also U-shaped, and the first connection protrusion 51 is an annular protrusion. A contact area between the first mounting groove 2121a and the first connection protrusion 51 is large, that is, a waterproof contact area is large, and waterproof effect is good. An arrow in FIG. 7 represents a transmission direction of a laser.

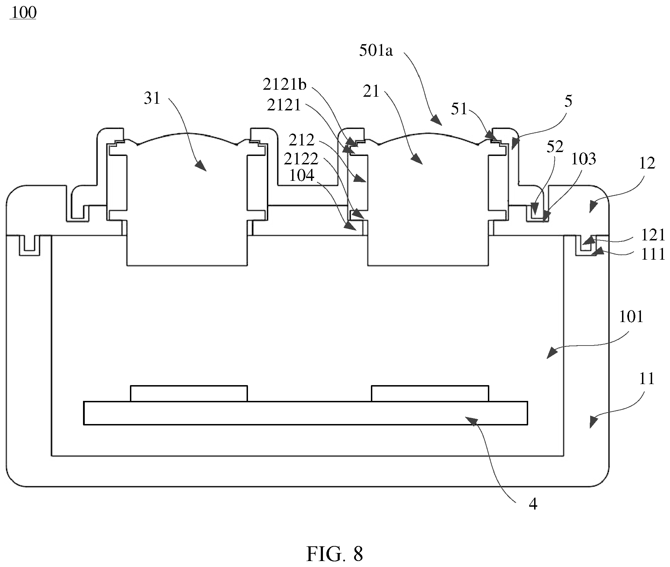

In some other embodiments of this application, as shown in FIG. 8, a first groove 2121b is formed at an edge of the first flange 2121, and the first groove 2121b may also be an annular groove. In addition, a shape of the first connection protrusion 51 matches a shape of the first groove 2121b. The first connection protrusion 51 may be in lap joint with the first groove 2121b, and is connected to the first groove 2121b in a waterproof manner. For example, the first connection protrusion 51 is connected to the first groove 2121b of the first flange 2121 in a waterproof manner by using a waterproof adhesive.

The receiver lens group 31 may also be a structure including a housing body 212 and a plurality of lenses 211. In addition, a connection manner between the receiver lens group 31 and the protective cover 5 may also be the same as the connection manner between the transmitter lens group 21 and the protective cover 5, which is not described herein.

Further, there may also be a plurality of waterproof connection manners between the protective cover 5 and the housing 1. For example, refer to FIG. 7. A second mounting groove 103 is provided in the housing 1, and a second connection protrusion 52 is disposed at a position that is on the protective cover 5 and that corresponds to the second mounting groove 103. The second connection protrusion 52 is connected to the second mounting groove 103 in a waterproof manner. For example, the second connection protrusion 52 is connected to the second mounting groove 103 in a waterproof manner by using a waterproof adhesive, and waterproof effect is good.

A cross section of the second mounting groove 103 shown in FIG. 7 is U-shaped. In addition, the second mounting groove 103 is an annular groove, and extends along a circumferential direction of the housing 1. A cross section of the second connection protrusion 52 is also U-shaped, and the second connection protrusion 52 is an annular protrusion. A contact area between the second mounting groove 103 and the second connection protrusion 52 is large, that is, a waterproof contact area is large, and waterproof effect is good.

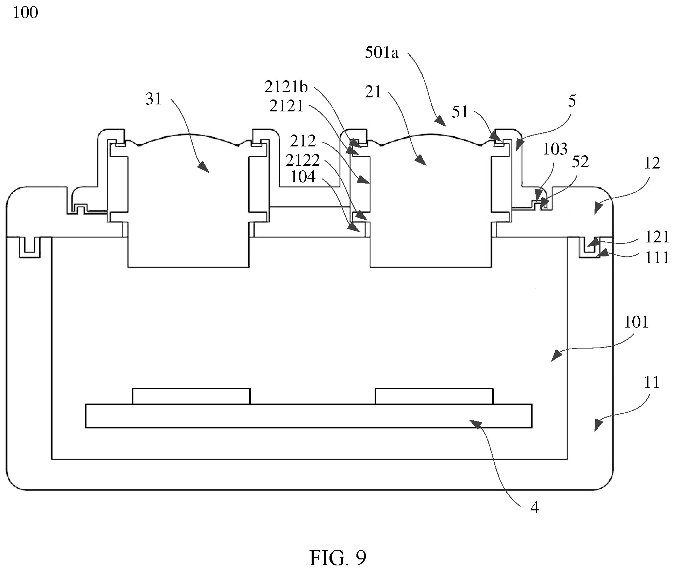

It may be understood that positions of the second mounting groove 103 and the second connection protrusion 52 may also be exchanged. To be specific, as shown in FIG. 9, the second mounting groove 103 is located on the protective cover 5, and the second connection protrusion 52 is disposed on the housing 1. This is not limited in this application.

In addition, in some embodiments of this application, the transmitter lens group 21 is partially disposed in the mounting opening 102. In addition, the transmitter lens group 21 may be connected to the housing 1 in a waterproof manner. A waterproof path between the transmitter lens group 21 and the housing 1 is additionally provided in the lidar 200, to enhance waterproof effect on the circuit board assembly. It may be understood that, the transmitter lens group 21 may also be partially disposed in the mounting opening 102, and the receiver lens group 31 is connected to the housing 1 in a waterproof manner, which may also enhance waterproof effect on the circuit board assembly.

There may also be a plurality of waterproof connection manners between the transmitter lens group 21 and the housing 1. For example, as shown in FIG. 7, FIG. 8, and FIG. 9, a second flange 2122 is disposed on the outer wall of the housing body 212 of the transmitter lens group 21, and the second flange 2122 extends along the circumferential direction of the housing body 212. A support boss 104 is disposed at a position that is on the housing 1 and that corresponds to the second flange 2122, and the support boss 104 is connected to the second flange 2122 in a waterproof manner. For example, the support boss 104 is bonded to the second flange 2122 by using a waterproof adhesive, waterproof effect is good, and a structure is simple.

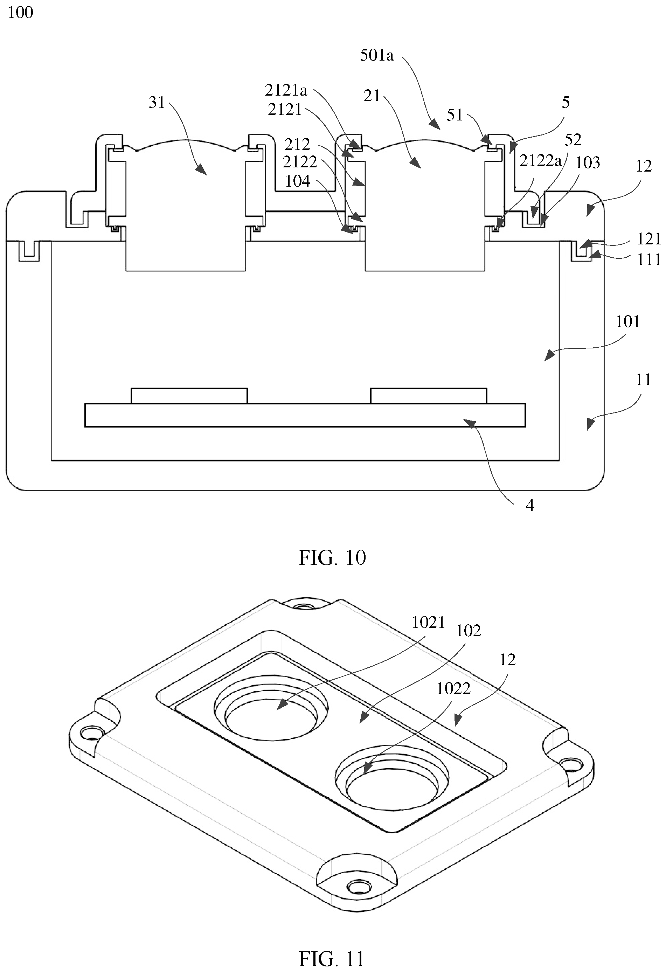

In addition, in some embodiments, a protrusion 2122a shown in FIG. 10 may be disposed on the second flange 2122. A second groove 1041 is formed in the support boss 104, and the second groove 1041 may be an annular groove. Further, a shape of the second groove 1041 may match a shape of the protrusion 2122a, so that the protrusion 2122a may be inserted into the second groove 1041 and is connected to the second groove 1041 in a waterproof manner by using a waterproof adhesive. A contact area between the support boss 104 and the second flange 2122 is increased, thereby improving waterproof strength of the transmitter lens group 21 and the housing 1.

Similarly, a waterproof connection structure between the receiver lens group 31 and the housing 1 may also be the same as or similar to the waterproof connection structure between the transmitter lens group 21 and the housing 1, and details are not described herein again.

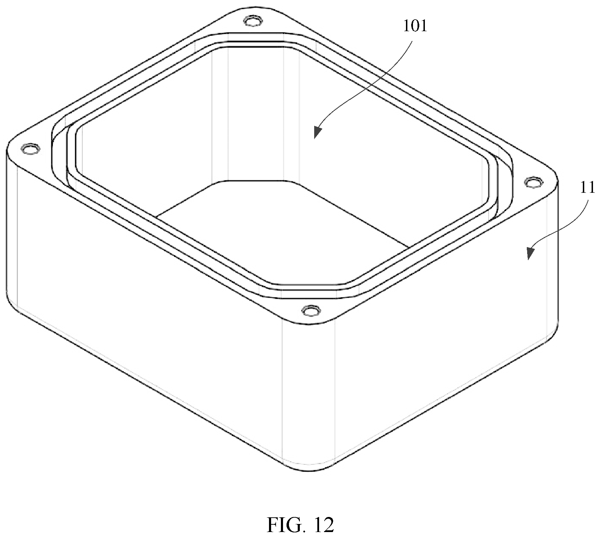

It should be noted that, to facilitate mounting of the circuit board assembly, in some embodiments of this application, refer to FIG. 11 and FIG. 12. The housing 1 includes a first housing 11 and a second housing 12, and the first housing 11 and the second housing 12 enclose the accommodating cavity 101. The mounting opening 102, the first communication hole 1021, and the second communication hole 1022 may all be provided in the second housing 12. When the circuit board assembly is mounted in the first housing 11, the transmitter lens group 21 of the transmitter 2 is aligned with the first communication hole 1021, and the receiver lens group 31 of the receiver 3 is aligned with the second communication hole 1022. Then, the first housing 11 is connected to the second housing 12, for example, fastened to the second housing 12 by using a screw 13 shown in FIG. 4.

Therefore, it may be understood that a waterproof connection is also required at a joint between the first housing 11 and the second housing 12, to ensure waterproof effect on the circuit board assembly. In some embodiments of this application, as shown in FIG. 7, FIG. 8, FIG. 9, and FIG. 10, a third mounting groove 111 is provided in the first housing 11, and a third connection protrusion 121 is disposed at a position that is on the second housing 12 and that corresponds to the third mounting groove 111. The third connection protrusion 121 is connected to the third mounting groove 111 in a waterproof manner. For example, the third connection protrusion 121 is connected to the third mounting groove 111 in a waterproof manner by using a waterproof adhesive, waterproof effect of the housing 1 is good, and a waterproof structure is simple.

In addition, a cross section of the third connection protrusion 121 shown in FIG. 10 is U-shaped. Further, the third connection protrusion 121 is an annular protrusion, and extends along a circumferential direction of the second housing 12. A cross section of the third mounting groove 111 is also U-shaped. The third mounting groove 111 is an annular groove extending along a circumferential direction of the first housing 11. A relative area between the third connection protrusion 121 and the third mounting groove 111 is large, an area in which the third connection protrusion 121 may be in contact with the third mounting groove 111 by using the waterproof adhesive is large, and waterproof effect is good.

It may be understood that positions of the third mounting groove 111 and the third connection protrusion 121 may also be interchanged. To be specific, the third connection protrusion 121 is disposed on the first housing 11, and the third mounting groove 111 is provided in the second housing. This is not limited in this application.

Therefore, in this embodiment of this application, waterproof performance of a joint of each component in the lidar 200 is good, thereby ensuring sealing and reliability of the lidar 200, and prolonging a service life.

Moreover, in addition to being used in a vehicle, the lidar 200 may be further used in various electronic devices that require ranging and speed measurement, such as a robot, a monitoring device, and a smart home device (such as an air conditioner or an air purifier). An application scenario of the lidar 200 is not limited in this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A lidar, comprising:
a housing, wherein the housing is provided with an accommodating cavity, and a mounting opening is provided in the housing;
a protective cover, wherein the protective cover is connected to the mounting opening in a waterproof manner, the protective cover is provided with a lens accommodating hole, the lens accommodating hole is provided with a first opening and a second opening, the first opening faces the mounting opening and communicates with the accommodating cavity, and the second opening communicates with an outside; and
a lens group, wherein the lens group is connected in the lens accommodating hole in a waterproof manner.

2. The lidar according to claim 1, wherein the protective cover is made of plastic or metal.

3. The lidar according to claim 1 or 2, wherein a wall surface on which the lens accommodating hole is located protrudes from the housing.

4. The lidar according to any one of claims 1 to 3, wherein the lens group comprises a housing body and a plurality of lenses mounted in the housing body, a first flange is disposed on an outer wall of the housing body in a circumferential direction, and a first mounting groove is formed in a surface that is of the first flange and that faces the protective cover; and
the protective cover is provided with a first connection protrusion that cooperates with the first mounting groove, and the first connection protrusion is connected to the first mounting groove in a waterproof manner.

5. The lidar according to any one of claims 1 to 4, wherein a second mounting groove is provided in an outer wall of the housing, a second connection protrusion is disposed at a position that is on the protective cover and that corresponds to the second mounting groove, and the second connection protrusion is connected to the second mounting groove in a waterproof manner.

6. The lidar according to any one of claims 1 to 5, wherein the lens group is partially disposed in the mounting opening, and is connected to the housing in a waterproof manner.

7. The lidar according to claim 6, wherein the lens group comprises the housing body and the plurality of lenses mounted in the housing body, a second flange is disposed on the outer wall of the housing body in the circumferential direction, a support boss is disposed at a position that is on the housing and that corresponds to the second flange, and the support boss is connected to the second flange in a waterproof manner.

8. The lidar according to any one of claims 1 to 7, wherein the housing comprises a first housing and a second housing, a third connection protrusion is disposed on the first housing, a third mounting groove is provided at a position that is on the second housing and that corresponds to the third connection protrusion, and the third mounting groove is connected to the third connection protrusion in a waterproof manner.

9. An electronic device, comprising:
a controller; and
the lidar according to any one of claims 1 to 8, wherein the controller is electrically connected to the lidar.

10. A vehicle, comprising:
a vehicle body; and
the lidar according to any one of claims 1 to 8, wherein the lidar is mounted on the vehicle body.
